# EUROPEAN PATENT SPECIFICATION

(11) **EP 0 736 487 B1**
(45) Date of publication and mention of the grant of the patent: **03.03.1999**
(21) Application number: 96302397.3
(22) Date of filing: 03.04.1996
(51) Int. Cl.: C01B 31/00

(54) **Graphite intercalation compounds and their production**
Graphiteinlagerungsverbindungen und deren Herstellung
Composés d'intercalation du graphite et leur production

(30) Priority: 03.04.1995 JP 77682/95
(43) Date of publication of application: 09.10.1996
(73) Proprietor: Japan Science and Technology Corporation, Kawaguchi-shi, Saitama 332 (JP); Tanaka, Shun-ichiro, Yokohama-shi, Kanagawa-ken (JP)
(72) Inventor: Xu, BingShe, Yokohama-shi, Kanagawa-ken (JP); Tanaka, Shun-ichiro, Yokohama-shi, Kanagawa-ken (JP)
(74) Representative: March, Gary Clifford

(56) References cited:
- US-A- 4 560 409
- US-A- 5 316 636
- CHEMICAL PHYSICS LETTERS, 25 JUNE 1993, NETHERLANDS, vol. 209, no. 1-2, ISSN 0009-2614, pages 99-103, XP000569464 UGARTE D: "How to fill or empty a graphitic onion"
- ELECTRONIC PROPERTIES OF FULLERENES, PROCEEDINGS OF THE INTERNATIONAL WINTERSCHOOL ON ELECTRONIC PROPERTIES OF NOVEL MATERIALS, 6 - 13 March 1993, TIROL, pages 78-82, XP000569483 UGARTE D. & AL.: "Generation of graphitic onions"
- CHEMICAL ABSTRACTS, vol. 84, no. 6, 9 February 1976 Columbus, Ohio, US; abstract no. 38105k, NOVIKOV YU. N. & AL.: "New production process for graphite lamellar compounds with transition metals" page 515; column r; XP002005899 & IZV. AKAD. NAUK SSSR, SER. KHIM., no. 10, 1975, pages 2381-2382,
- CHEMICAL ABSTRACTS, vol. 74, no. 20, 17 May 1971 Columbus, Ohio, US; abstract no. 106711a, VOL'PIN, M. E. & AL.: "Reduction of graphite intercalation compounds with transition metal chlorides" page 474; XP002005900 & IVZ. AKAD. NAUK SSSR, SER. KHIM., no. 11, 1970, pages 2608-2609,

## Description

This invention relates to graphite intercalation compounds and their production.

Graphite intercalation compounds can be produced by intercalating a different kind of substance within a space of graphite having a layer structure, are capable of improving electric conductivity and can be industrially applied to functional materials such as catalysts which utilize the properties of the intercalated substance. Various intercalation compounds have been synthesized and their physical properties and/or applications thereof have been researched.

As examples of different kinds of substance intercalated within a space of graphite having a layer structure, alkali metals such as Li, Na, or K, alkaline-earth metals such as Ca, Sr, or Ba, rare earth elements such as Sm, Eu, or Yb, transition metals such as Mn, Fe, Ni, Co, Zn, or Mo, halogens such as Br₂, ICl, or IBr, acids such as HNO₃, H₂SO₄, HF, or HBF₄, and chlorinated metal compounds such as MgCl₂, FeCl₂, NiCl₂, AlCl₃, or sbCl₅ are reported.

Conventionally, the graphite intercalation compound with a different kind of substance intercalated in a space of the graphite layer structure is produced by (a) a method of contacting graphite with a gaseous phase or a liquid phase of the substance to be intercalated, or (b) electrolysis of an electrolyte including the substance to be intercalated using a graphite electrode. For example, graphite intercalation compounds based on alkali metals can be obtained by mixing or otherwise contacting graphite with the alkali metals under a vacuum and heating them. A graphite intercalation compound using halogens can be produced by contacting graphite with a liquid phase or vapour of Br₂, ICl, or IBr. A graphite intercalation compound using one of the alkaline-earth metals such as Ca, Sr, or Ba, or rare earth elements such as Sm, Eu, or Yb can be produced by mixing graphite ultrafine powder with the corresponding metal powder, applying a pressure of 1 to 2 MPa, and then pressureless sintering.

A graphite intercalation compound using one of the transition metals such as Fe, Co, or Mo can be produced by synthesizing an intercalation compound using a chloride of these metals, and reducing the compound slowly at/or below room temperature using NaBH₄, LiAlH₄, Na or the like. The reduction method has, however, low reproducibility and a drawback that a graphite intercalation compound of transition metals cannot be stably obtained.

The conventional methods for producing a graphite intercalation compound utilize powder calcination, powder-gaseous/liquid phase reaction or electrolysis, for example

These normal production methods are suitable for obtaining a graphite intercalation compound as an aggregate. However, a graphite intercalation compound in a controlled shape, distribution and/or states, for example, producing an intercalation compound on a specified nanoscale area of graphite, cannot be produced.

As described above, the conventional graphite intercalation compound has drawbacks of low reproducibility in intercalating transition metals in a space of graphite having a layer structure, and a limited number of applicable transition metals.

To enlarge the range of graphite intercalation compounds and their applications, it is desirable for a graphite intercalation compound to be produced in a controlled status, i.e. selectively producing an intercalation compound on a specified nanoscale area of graphite.

An object of the present invention is to provide a graphite intercalation compound and a production method thereof to enhance controllability such as enabling production of an intercalation compound on a specified nanoscale area of the graphite, and simultaneously to improve reproducibility.

In the graphite intercalation compound of the present invention, aluminium atoms are intercalated in a space between (001) plane and (002) plane of the graphite having a layer structure by irradiating an electron beam upon them.

According to a production method of the graphite intercalation compound of the present invention, an onion-like graphite upon which active aluminium nanoparticles are disposed is irradiated by an electron beam under a vacuum atmosphere together with said aluminium nanoparticles to shrink said onion-like graphite, whereby aluminium atoms constituting said aluminium nanoparticles become intercalated into and within the space between the (001) plane and the (002) plane of said onion-like graphite having a layer structure.

In the intercalation compound of the present invention, the aluminium atoms are intercalated within the space between the (001) plane and the (002) plane of the graphite having a layer structure. Giant fullerenes wherein an intercalation distance is equal to graphite, such as onion-like graphite, are cited as an example of said graphite. The graphite intercalation compound of the present invention can be formed by irradiating an electron beam upon the onion-like graphite upon which the active aluminium nanoparticles are disposed, and by intercalating aluminium atoms in the space between the (001) plane and the (002) plane of the onion-like graphite having a layer structure.

When disposing the active aluminium nanoparticles on the onion-like graphite, and irradiating the electron beam on the onion-like graphite, the onion-like graphite shrinks and the aluminium nanoparticles become smaller. Simultaneously aluminium atoms constituting the aluminium nanoparticles become intercalated into the space of the graphite having a layer structure. Use of electron beams having an intensity of not less than 1 X 10¹⁹e/cm².sec (2A/cm²) is preferred. If the intensity of the electron beam is less than 1 X 10¹⁹e/cm².sec, carbon atoms may not be sufficiently activated to shrink the onion-like graphite. In other words, electron beams having an intensity of not less than 1 X 10¹⁹ e/cm².sec appears to induce a localized heating effect and an atom displacement (knock-on) effect to the onion-like graphite. Thereby, the onion-like graphite can shrink, and the aluminium atoms can be intercalated into the space of the onion-like graphite. Irradiation of the electron beam under a vacuum of 10⁻⁵ Pa or less is preferable. If the vacuum exceeds 10⁻⁵ Pa, remaining gas atoms may be adsorbed to prevent the aluminium atoms from intercalating into the onion-like graphite.

As the onion-like graphite upon which the aluminium nanoparticles are disposed to be impinged upon by said electron beam, independent and controllable such graphites are preferably used. An original onion-like graphite is preferably of a size such that aluminium nanoparticles can be located thereon for impinging by the electron beam. For example, the initial onion-like graphite having a diameter of 10 to 30 nm is preferable.

As the active aluminium nanoparticles disposed on the onion-like graphite, pure aluminium nanoparticles having no surface oxide or similar film are preferably used. The diameter of the aluminium nanoparticles is preferably in the range of 5 to 20 nm. If the diameter of the aluminium nanoparticles is less than 5 nm or exceeds 20 nm, in any case, the aluminium atoms may not be intercalated correctly in the space of the onion-like graphite having a layer structure, and may not also be disposed adequately on the onion-like graphite nor impinged upon properly by the electron beam, as described later. The method of making the aluminium nanoparticles is not limited to the procedure just described. For example, aluminium nanoparticles can be produced by irradiating an electron beam under a vacuum upon metastable aluminium oxide particles, as described later.

The onion-like graphite, which is preferably independent and controllable, is one starting material of the graphite intercalation compound of the present invention. Accordingly, preferred methods for producing the onion-like graphite include the following techniques:
1. Amorphous carbon such as i-carbon upon which active aluminium nanoparticles are disposed, is irradiated by an electron beam under a vacuum atmosphere to produce the onion-like graphite, or
2. Metastable aluminium oxide particles disposed upon amorphous carbon such as i-carbon are irradiated by an electron beam under a vacuum atmosphere to produce the onion-like graphite.

In the method 1. for producing the onion-like graphite, the diameter of the active aluminium nanoparticles disposed on the amorphous carbon is preferably in the range of 5 to 100 nm. If the diameter of the aluminium nanoparticles exceeds 100 nm, the amorphous carbon thereunder may not be activated sufficiently. Aluminium nanoparticles having a diameter of less than 5 nm are difficult to produce. More preferably, the diameter of the aluminium nanoparticles is in the range of 5 to 20 nm.

It is believed that, without being bound by any theoretical explanations, when the electron beam is irradiated upon the amorphous carbon together with the active aluminium nanoparticles under the above-mentioned conditions, the atomic arrangement of the amorphous carbon which exists under the active aluminium nanoparticles is changed to produce the onion-like graphite under and around the active aluminium nanoparticles. The onion-like graphite is obtained independently to facilitate continuous irradiation of the electron beam. Therefore, the onion-like graphite is suitable as a starting material to produce graphite intercalation compounds according to the present invention.

In producing the onion-like graphite, an electron beam having an intensity of not less than 1 X 10¹⁹e/cm².sec (2A/cm²) is preferred. If the intensity of the electron beam is less than 1 X 10¹⁹e/cm².sec, the carbon atoms may not be activated sufficiently to produce the onion-like graphite. In other words, an electron beam with intensity of not less than 1 X 10¹⁹e/cm².sec appears to induce a localized heating effect an atom displacement (knock-on) effect to the onion-like graphite. Thereby, the onion-like graphite can shrink. Irradiation of the electron beam under a vacuum of 10⁻⁵ Pa or less is preferable. If the vacuum exceeds 10⁻⁵ Pa, remaining gas atoms may be adsorbed into the carbon which would hinder or prevent production of the onion-like graphite.

The onion-like graphite produced according to the method 1. involves aluminium nanoparticles, which are used as another starting material for the graphite intercalation compounds of the present invention. In other words, when an electron beam is irradiated continuously upon the onion-like graphite produced under the aluminium nanoparticles, a graphite intercalation compound of the present invention can be produced.

In the method 2. for producing the onion-like graphite, metastable Θ-Al₂O₃ particles which are a metastable phase of Al₂O₃ can be used, for example. In irradiating such metastable aluminium oxide particles, an electron beam having of intensity of not less than 1 X 10¹⁹e/cm².sec (2A/cm²) is preferred. For example, when an electron beam of intensity not less than 1 X 10¹⁹ a/cm².sec is irradiated upon the Θ-Al₂O₃ particles disposed on the amorphous carbon, carbon atoms are provided as constituent atoms from the carbon source of adsorbed atoms or impurities which exist on the Θ-Al₂O₃ particles to produce the onion-like graphite around the metastable aluminium oxide particles. The onion-like graphite can be obtained independently to facilitate continuous irradiation of the electron beam. Therefore, the onion-like graphite is suitable as a starting material to form graphite intercalation compounds according to the present invention.

When using the onion-like graphite produced according to the method 2., the active aluminium nanoparticles are disposed and impinged thereon and the electron beam is then irradiated under the above-mentioned conditions to produce a graphite intercalation compound of the present invention. To cause the aluminium nanoparticles to be impinged upon the onion-like graphite, the electron beam is irradiated upon the aluminium nanoparticles and is scanned to move the aluminium nanoparticles. The aluminium nanoparticles disposed on the onion-like graphite can be impinged thereupon by the electron beam, and have a size capable of being disposed on the onion-like graphite. A diameter of about 5 to 20 nm for the aluminium nanoparticles is preferable, as mentioned above. The aluminium nanoparticles can be produced in a secondary manner during production of the onion-like graphite by irradiating the electron beam upon the Θ-Al₂O₃ particles.

Graphite intercalation compounds of the present invention can be obtained by irradiating the electron beam upon independently controllable giant fullerenes such as the onion-like graphite upon which the aluminium nanoparticles are disposed. Therefore, controllability of states, shape and/or distribution in which, for example, the graphite intercalation compound can be produced on a specified nanoscale area of the graphite, and reproducibility of the graphite intercalation compound can be significantly enhanced. Moreover, the intercalation compound can be produced in an independent state under controlled conditions. Thereby, physical properties of the intercalation compound can be ascertained, and various operations and controls can be realized. Generally, irradiating an electron beam under controlled heating conditions is difficult. Therefore, it is significant that the intercalation compound can be produced by irradiating the electron beam in a room temperature stage.

In order that the invention may be illustrated, more easily appreciated and readily carried into effect by those skilled in this art, embodiments of the invention will now be described by way of non-limiting example only with reference to the accompanying drawings and wherein:
Fig. 1A and Fig. 1B are schematic diagrams of a method for producing a graphite intercalation compound according to the embodiment 1 of the present invention;
Fig. 2 is a graph showing a change of longer and shorter diameter of aluminium nanoparticles and an onion-like graphite after elapsed time of irradiation of the electron beam in a production method of a graphite intercalation compound according to the embodiment 1 of the present invention;
Fig. 3 is a graph showing a change of a lattice spacing d of each portion of the onion-like graphite after elapsed time of irradiation of the electron beam in a production method of a graphite intercalation compound according to the embodiment 1 of the present invention;
Fig. 4 is a schematic diagram showing production states of the aluminium nanoparticles and the onion-like graphite used for producing the graphite intercalation compound according to the embodiment 2 of the present invention; and
Fig. 5A and Fig. 5B are schematic diagrams of a method for producing a graphite intercalation compound according to the embodiment 2 of the present invention.

Embodiments of the present invention will be described with reference to these drawings.

### Embodiment 1

Production of active aluminium nanoparticles will be described. First, spherical θ-Al₂O₃ particles (purity 99.8%) having a diameter of about 100 nm were prepared. The particles were dispersed in alcohol, applied to an amorphous carbon support film made of i-carbon and dried. Secondly, the amorphous carbon support film with the disposed spherical θ-Al₂O₃ particles was arranged in a room temperature stage which was disposed in a vacuum chamber of 200kV TEM (JEOL, JEM-2010). Thirdly, the vacuum chamber was evacuated to 1 x 10⁻⁵ Pa. Fourthly, an electron beam having an intensity of 1.3 x 10²⁰e/cm²·sec (20A/cm²) was irradiated upon the θ-Al₂O₃ particles having a diameter of about 100 nm disposed on the amorphous carbon support film. By irradiation of the electron beam, aluminium nanoparticles having a diameter of about 5 to 15 nm were produced on the amorphous carbon support film.

Using the aluminium nanoparticles, an onion-like graphite and a graphite intercalation compound thereof were produced. Upon leaving the TEM vacuum (constant vacuum level) where the amorphous carbon support film was disposed, aluminium nanoparticles having a longer diameter of about 15 nm were selected from the aluminium nanoparticles on the carbon support film, whereupon an electron beam of intensity 1.3 x 10²⁰e/cm²·sec (20A/cm²) was irradiated (irradiation diameter = 250 nm) upon the aluminium nanoparticles having a longer diameter of about 15 nm together with the amorphous carbon thereunder.

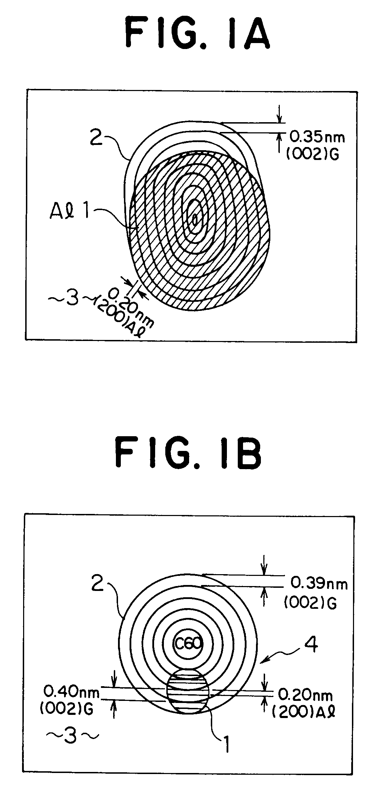

While irradiating the electron beam, the state of the aluminium nanoparticles and the amorphous carbon in the TEM apparatus was observed in-situ. With reference to the schematic diagrams of Fig.1A and Fig. 1B, the observed result will be described. After 300 seconds irradiation of the electron beam, a carbon structure 2 having an elliptic and concentric circle with a longer diameter of 15 nm under the aluminium nanoparticle 1 was produced, as shown in Fig. 1A. Because the distance between layers of the carbon structure having an elliptic and concentric circle was about 0.35 nm, the carbon structure was identified as an onion-like graphite 2. Around the onion-like graphite 2, the amorphous carbon 3 still existed.

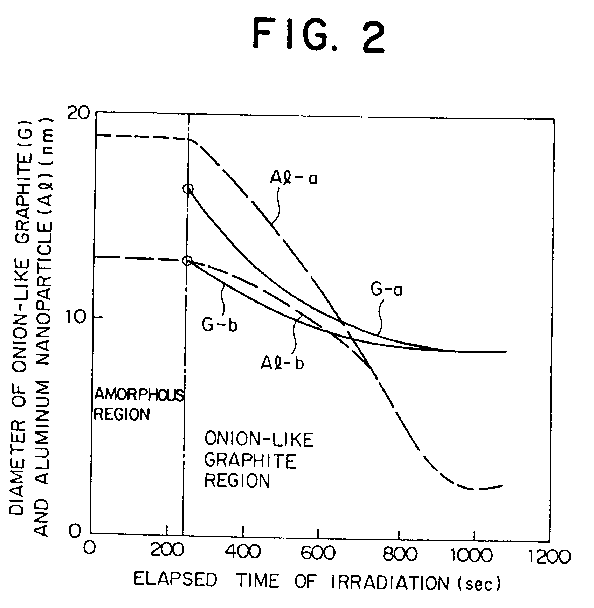

While further irradiating the electron beam, the onion-like graphite 2 shrank gradually to become smaller in a concentric circle shape, and the aluminium nanoparticle 1 also became smaller. After 800 to 1000 seconds irradiation of the electron beam, the onion-like graphite 2 shrank in the concentric circle shape, and the aluminium nanoparticle 1 became smaller to have a diameter of 2 nm, as shown in Fig. 1B. Fig. 2 shows a change of longer (A1-a) and shorter (A1-b) diameter of the aluminium nanoparticle 1 and a change of longer (G-a) and shorter (G-b) diameter of the onion-like graphite 2 after elapsed time of irradiation of the electron beam. As is apparent from Fig. 2, the aluminium nanoparticle 1 and the onion-like graphite 2 of elliptic shapes shrank to become circular shapes.

During this reduction in size, aluminium atoms (atom aggregates) constituting the aluminium nanoparticle 1 became intercalated within a space (Van der Waals bond layer) between (001) plane and (002) plane of the onion-like graphite 2 having a layer structure to form a graphite intercalation compound 4. The graphite intercalation compound 4 was identified by Energy Dispersive X-ray Spectoroscopy (EDS). A distance between layers of the onion-like graphite 2 widened to 0.40 nm despite a normal distance of 0.334 nm. Twenty percent of lattice distortion existed.

In the graphite intercalation compound 4, the aluminium atom aggregates constituting the aluminium nanoparticle 1 were arranged such that the (002) plane of the aluminium nanoparticle 1 was parallel with the (002) plane of the onion-like graphite 2. The aluminium aggregates and the onion-like graphite 2 were in epitaxy relations. The lattice spacing d between (001) plane and the (002) plane of the onion-like graphite 2 were the aluminium atoms were clearly identified was 0.40 nm. The lattice of the onion-like graphite 2 expanded to be twice the length of 0.20 nm (which is the distance between the (200) planes of the aluminium). In this portion, the crystal structures appears to be equivalent to that of Al₂C₆.

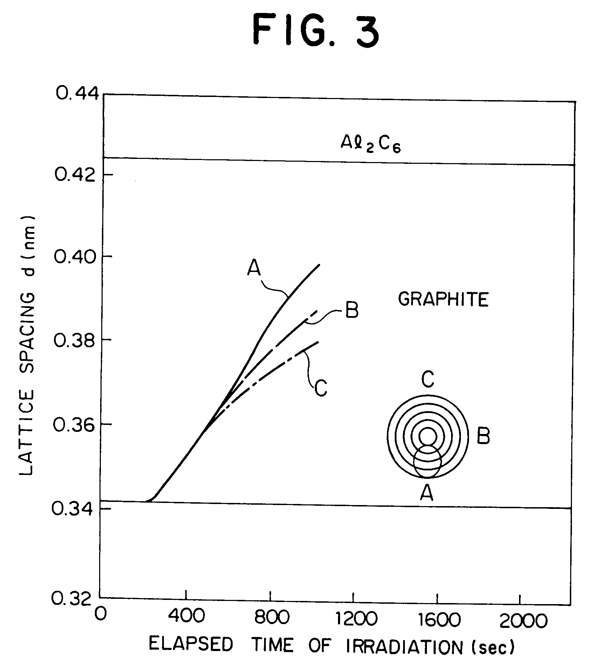

Fig. 3 shows a change of lattice spacing d of each portion (A, B, C) of the onion-like graphite 2 after elapsed time of irradiation by the electron beam. As is apparent from Fig. 3, aluminium atoms are dispersed in each portion of the onion-like graphite 2.

Thus, by irradiating the electron beam upon the onion-like graphite 2 upon which the aluminium nanoparticle 1 was disposed, a graphite intercalation compound 4 that comprises aluminium atoms (aluminium atom aggregates) which are a constituent of the aluminium nanoparticle 1 were intercalated into the space between the (001) plane and the (002) plane of the onion-like graphite 2 having a layer structure . This production of graphite intercalation compound 4 is apparently based on both a localized heating effect and an atom displacement (knock-on) effect by the irradiated electron.

### Embodiment 2

Production of an onion-like graphite and aluminium nanoparticles will be described. First, spherical θ-Al₂O₃ particles (purity 99.8%) with a diameter of about 100 nm were prepared. The particles were dispersed in alcohol, applied to an amorphous carbon support film made of i-carbon and dried. Secondly, the amorphous carbon support film comprising the disposed spherical θ-Al₂O₃ particles was arranged in a room temperature stage which was placed into a vacuum chamber of 200kV TEM (JEOL, JEM-2010).

Thirdly, the vacuum chamber was evacuated to 1 x 10⁻⁵ Pa. Fourthly, an electron beam having an intensity of 1.3 x 10²⁰ e/cm²·sec (20A/cm²) was irradiated to impinge upon the θ-Al₂O₃ particles having a diameter of about 100 nm disposed on the amorphous carbon support film. By irradiation of the electron beam, an onion-like graphite having a diameter of about 10 to 30 nm and aluminium nanoparticles having a diameter of about 5 to 10 nm were produced on the amorphous carbon support film.

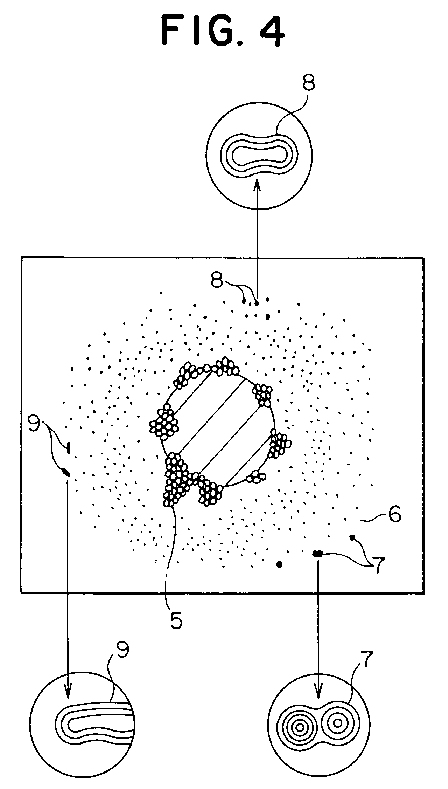

Fig. 4 shows an observed result of the states of the onion-like graphite and the aluminium nanoparticles in TEM. As shown in Fig. 4, by irradiating the electron beam upon the θ-Al₂O₃ particles, α-Al₂O₃ particles 5 which were smaller than the θ-Al₂O₃ were produced. Around the α-Al₂O₃ particle 5, an aluminium nanoparticle 6 having a diameter of about 5 to 10 nm and an onion-like graphite 7 having a diameter of about 10 to 30 nm were produced. Around the initial θ-Al₂O₃ particles, a carbon nanocapsule 8 having a diameter of about 20 nm and a carbon nanotube 9 having a thickness of about 10 nm were also produced.

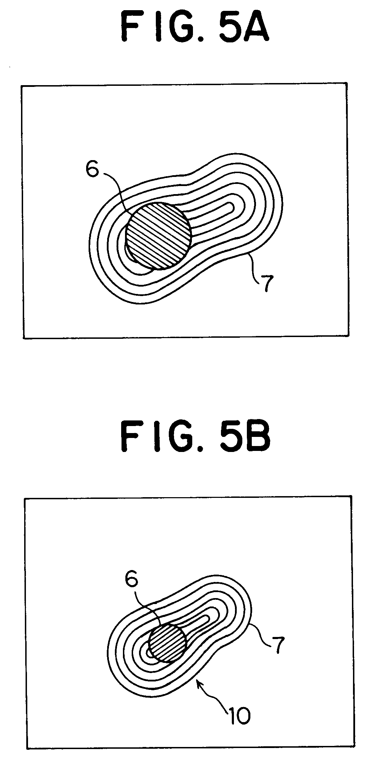

Using the onion-like graphite and the aluminium nanoparticles, a graphite intercalation compound was produced. The status of the production in the TEM apparatus was observed in-situ. With reference to schematic diagrams of Fig. 5A and Fig. 5B, the observed result will be described. The onion-like graphite 7 having a longer diameter of about 15 nm and the aluminium nanoparticle 6 having a diameter of about 5 nm near the graphite were selected. By irradiating and scanning the electron beam to impinge upon the aluminium nanoparticle 6, the aluminium nanoparticle 6 became impinged into the onion-like graphite 7, as shown in Fig. 5A.

An electron beam having an intensity of 1.3 x 10²⁰e/cm²·sec (20A/cm²) was irradiated (irradiation diameter = 250 nm) upon the onion-like graphite 7 upon which the aluminium nanoparticle 6 had been disposed and impinged. After elaspsed time of the irradiation, the onion-like graphite 7 shrank gradually to become smaller. After 560 seconds irradiation of the electron beam, a graphite intercalation compound 10 was obtained that comprised aluminium atoms (aluminium atom aggregates) being a constituent of the aluminium nanoparticle 6 which had become intercalated into a space (between van der Waals bonding layers) between (001) plane and (002) plane of the onion-like graphite 7 having a layer structure, as shown in Fig. 5B. In the graphite intercalation compound 10, the onion-like graphite 7 had a longer diameter of about 10 nm and the aluminium nanoparticle 6 had a diameter of about 2 nm.

Thus, by irradiating the electron beam to impinge upon the onion-like graphite upon which the aluminium nanoparticles were disposed, a graphite intercalation compound was obtained wherein the aluminium nanoparticles had become intercalated into the space between the (001) plane and the (002) plane of the onion-like graphite having a layer structure. This production of the graphite intercalation compound is apparently based on both a localized heating effect and an atom displacement (knock-on) effect by the irradiated electron.

As is apparent from these embodiments, according to the present invention, the intercalation compound can be produced by irradiating the electron beam and intercalating the aluminium atoms in the space between the (001) plane and the (002) plane of the graphite having a layer structure under the easily controllable conditions of a room temperature stage. Therefore, various manipulations using electron beams having a diameter in the order of nanometers can be effected.

As described above, according to the present invention, for example, the graphite intercalation compound can be produced on a specified nanoscale area of the graphite, therefore controllability of states, shape and/or distribution of the graphite intercalation compound is significantly enhanced. By satisfying such requirements, intercalation compounds wherein aluminium atoms are intercalated into and within the space of graphite having a layer structure can be obtained repeatedly.

## Claims

1. A graphite intercalation compound comprising aluminium atoms intercalated in a space between (001) plane and (002) plane of a graphite having a layer structure.

2. A graphite intercalation compound as claimed in claim 1, wherein the graphite is an onion-like graphite.

3. A compound as claimed in claim 1 or 2 which has been obtained by electron beam radiation.

4. A method for producing a graphite intercalation compound comprising the steps of:
disposing active aluminium nanoparticles on an onion-like graphite, and
irradiating an electron beam upon the onion-like graphite including the aluminium nanoparticles under a vacuum atmosphere so as to shrink the onion-like graphite and simultaneously intercalate aluminium atoms being a constituent of the aluminium nanoparticles in a space between the (001) plane and the (002) plane of a graphite having a layer structure.

5. A method as claimed in claim 4, wherein the onion-like graphite is produced by disposing active aluminium nanoparticles on amorphous carbon, and by irradiating the electron beam on the amorphous carbon including the aluminium nanoparticles under a vacuum atmosphere.

6. A method as claimed in claim 4, wherein the onion-like graphite is produced by disposing metastable aluminium oxide particles on the amorphous carbon, and the electron beam is irradiated upon the metastable aluminium oxide particles under a vacuum atmosphere.

7. A method as claimed in any one of claims 4 to 5, wherein the electron beam has an intensity of not less than 1 X 10¹⁹e/cm².sec.

## Patentansprüche

1. Eine Graphiteinlagerungsverbindung, die Aluminiumatome aufweist, die in einem Raum zwischen einer (001)-Ebene und einer (002)-Ebene eines Graphites eingelagert sind, das eine Schichtstruktur aufweist.

2. Eine Graphiteinlagerungsverbindung nach Anspruch 1, wobei das Graphit ein zwiebelartiges Graphit ist.

3. Eine Verbindung nach Anspruch 1 oder 2, die durch Elektronenstrahl-Bestrahlung erhalten worden ist.

4. Ein Verfahren zum Herstellen einer Graphiteinlagerungsverbindung mit folgenden Schritten:
Anordnen von aktiven Aluminium-Nanopartikeln auf einem zwiebelartigen Graphit und
Richten eines Elektronenstrahles auf das zwiebelartige Graphit, das die Aluminium-Partikel aufweist, unter einer Vakuumatmosphäre, um das zwiebelartige Graphit zu schrumpfen und gleichzeitig Aluminiumatome einzulagern, die Bestandteil der Aluminium-Nanopartikel in einem Raum zwischen der (001)-Ebene und der (002)-Ebene eines Graphites sind, das eine Schichtstruktur aufweist.

5. Ein Verfahren nach Anspruch 4, wobei das zwiebelartige Graphit hergestellt wird durch Anordnen von aktiven Aluminium-Nanopartikeln auf amorphem Kohlenstoff und durch Richten des Elektronenstrahles auf den amorphen Kohlenstoff, der die Aluminium-Nanopartikel aufweist, unter einer Vakuumatmosphäre.

6. Ein Verfahren nach Anspruch 4, wobei das zwiebelartige Graphit hergestellt wird durch Anordnen von metastabilen Aluminiumoxid-Partikeln auf dem amorphen Kohlenstoff und wobei der Elektronenstrahl auf die metastabilen Aluminiumoxid-Partikel unter einer Vakuumatmosphäre gerichtet wird.

7. Ein Verfahren nach einem der Ansprüche 4 bis 5, wobei der Elektronenstrahl eine Intensität von nicht weniger als 1 x 10¹⁹e/cm².sec. hat.

## Revendications

1. Composé d'intercalation du graphite comprenant des atomes d'aluminium intercalés dans un espace entre le plan (001) et le plan (002) d'un graphite ayant une structure lamellaire.

2. Composé d'intercalation du graphite selon la revendication 1, dans lequel le graphite est un graphite de type oignon.

3. Composé d'intercalation du graphite selon la revendication 1 ou 2, qui a été obtenu par irradiation avec un faisceau d'électrons.

4. Procédé pour produire un composé d'intercalation du graphite, comprenant les étapes consistant à :
disposer des nanoparticules d'aluminium actif sur un graphite de type oignon, et
irradier le graphite de type oignon contenant les nanoparticules d'aluminium avec un faisceau d'électrons sous une atmosphère de vide de façon que le graphite de type oignon subisse un retrait et, simultanément, s'intercalent des atomes d'aluminium représentant un constituant des nanoparticules d'aluminium dans un espace entre le plan (001) et le plan (002) d'un graphite ayant une structure lamellaire.

5. Procédé selon la revendication 4, dans lequel le graphite de type oignon est produit par disposition de nanoparticules d'aluminium actif sur du carbone amorphe, et irradiation du carbone amorphe contenant les nanoparticules d'aluminium avec un faisceau d'électrons sous une atmosphère de vide.

6. Procédé selon la revendication 4, dans lequel le graphite de type oignon est produit par disposition de particules d'oxyde d'aluminium métastable sur le carbone amorphe, après quoi les particules d'oxyde d'aluminium métastable sont irradiées par le faisceau d'électrons sous une atmosphère de vide.

7. Procédé selon l'une quelconque des revendications 4 à 5, dans lequel le faisceau d'électrons a une intensité non inférieure à 1 x 10¹⁹ e/cm².s.
